# EUROPÄISCHE PATENTSCHRIFT

(11) **EP 3 374 465 B1**
(45) Veröffentlichungstag und Bekanntmachung des Hinweises auf die Patenterteilung: **17.06.2020**
(21) Anmeldenummer: 16805983.0
(22) Anmeldetag: 11.11.2016
(51) Int. Cl.: C09K 11/06

(54) **LUMINESZENZ-FARBSTOFFE MIT MINDESTENS 3 EMISSIONSBANDEN ALS EMITTERFARBSTOFFE**
LUMINESCENT DYES AS EMITTER DYES HAVING AT LEAST 3 EMISSION BANDS
COLORANTS LUMINESCENTS AYANT AU MOINS TROIS BANDES D'ÉMISSION EN TANT QUE COLORANTS ÉMETTEURS DE LUMIÈRE

(30) Priorität: 12.11.2015 DE 102015119569
(43) Veröffentlichungstag der Anmeldung: 19.09.2018
(73) Patentinhaber: Karlsruher Institut für Technologie, 76131 Karlsruhe (DE)
(72) Erfinder: HÖRNER, Anna, 75245 Neulingen-Bauschlott (DE); BRÄSE, Stefan, 53842 Troisdorf (DE)
(74) Vertreter: Fitzner, Uwe
(86) Internationale Anmeldenummer: PCT/EP2016/077480
(87) Internationale Veröffentlichungsnummer: WO 2017/081283

(56) Entgegenhaltungen:
- EP-A2- 2 302 002
- JIA-SHENG LU ET AL: "A Dual Emissive BODIPY Dye and Its Use in Functionalizing Highly Monodispersed PbS Nanoparticles", ANGEWANDTE CHEMIE INTERNATIONAL EDITION, Bd. 50, Nr. 49, 13. Oktober 2011 (2011-10-13), Seiten 11658-11662, XP055337402, DE ISSN: 1433-7851, DOI: 10.1002/anie.201104690
- THOMAS BURA ET AL: "Highly Substituted Bodipy Dyes with Spectroscopic Features Sensitive to the Environment", THE JOURNAL OF ORGANIC CHEMISTRY, Bd. 76, Nr. 4, 18. Februar 2011 (2011-02-18), Seiten 1109-1117, XP055337414, ISSN: 0022-3263, DOI: 10.1021/jo102203f
- THOMAS BURA ET AL: "Fluorescent boron dipyrromethene (Bodipy) dyes having two and four vinyl residues", TETRAHEDRON LETTERS, ELSEVIER, AMSTERDAM, NL, Bd. 52, Nr. 18, 21. Februar 2011 (2011-02-21), Seiten 2370-2374, XP028160752, ISSN: 0040-4039, DOI: 10.1016/J.TETLET.2011.02.094 [gefunden am 2011-02-26]
- LOUDET A ET AL: "BODIPY dyes and their derivatives: Syntheses and spectroscopic properties", CHEMICAL REVIEWS, AMERICAN CHEMICAL SOCIETY, US, Bd. 107, Nr. 11, 1. Januar 2007 (2007-01-01), Seiten 4891-4932, XP002547571, ISSN: 0009-2665, DOI: 10.1021/CR078381N [gefunden am 2007-10-09] in der Anmeldung erwähnt

## Beschreibung

Die Erfindung betrifft die Verwendung bestimmter Verbindungen auf Basis sog. BODIPY-Verbindungen als Emitterfarbstoffe zur Erzeugung einer Lumineszenz mit mindestens drei getrennt bzw. einzeln erkennbaren Emissionsbanden.

Als BODIPY werden Verbindungen bezeichnet, die auf dem Grundgerüst bzw. Kern von Boron-Dipyromethylen mit folgender IUPAC-Bezeichnung 4,4-Difluoro-4-bora-3a,4a-diaza-s-indacen. BODIPY Verbindungen werden von Loudet et al. In Chem. Rev. 107, 4891-4932, 2007 beschrieben.

Verbindungen basierend auf diesem BODIPY-Kern bzw. Grundgerüst werden häufig als Fluoreszenz-Farbstoffe eingesetzt. BODIPY-Farbstoffe sind auch für eine hohe Leuchtkraft und hohe Quantenausbeute bekannt. Wegen diesen additiven Eigenschaften sind sie ideal als OLED (organische LED) und Lasermaterial geeignet.

Die meisten molekularen Fluoreszenzfarbstoffe emittieren nach der Kasha-Regel. Gemäß der Kasha-Regel emittieren die Farbstoffe vom ersten vibronischen Niveau des ersten angeregten Zustandes. Deshalb weist das Emissionsspektrum im Allgemeinen nur einen einzelnen Peak auf. Bei manchen Fluoreszenzfarbstoffen tritt eine Schulter rotverschoben zum Maximum der Emission auf. Diese ist jedoch häufig nur angedeutet, und spektroskopisch nicht (aufzutrennen) als getrennte Bande erkennbar bzw. durch optische Techniken schwer vom Emissionsmaximum zu trennen. Somit kann pro Fluoreszenzfarbstoff von den meisten bekannten Lumineszenzfarbstoffen nur ein einziger Wellenbereich zur Emission ausgesendet werden.

Die bisher bekannten Fluoreszenz-Farbstoffe, auch solche basierend auf oben beschriebenem BODIPY-Grundgerüst, zeigen lediglich eine Emissionsbande, also einen Peak im Emissionsspektrum.

Für verschiedene Anwendungsgebiete wie z.B. Laser und OLED, insbesondere mit weißer Strahlung, d.h. Strahlungsquellen, die weißes Licht aussenden, wären Fluoreszenzfarbstoffe nützlich, die nicht nur eine einzelne Emissionsbande aufweisen, sondern mehrere Emissionswellenlängen im sichtbaren Bereich aufweisen. So dass die Mischung der verschiedenen Emissionen eine weiße Farbe oder eine Farbe in Richtung Weiß (weißgelb, weißblau) aufweist.

Bei den bisher bekannten Farbstofflasern wird ein Farbstoff in einer Lösung gelöst und angeregt, so dass er emittiert. Die Anregung erfolgt hierbei oft über einen Pumplaser. Wird bei einem Farbstofflaser nur ein einziger Farbstoff verwendeten, so enthält der ausgesendete Laserstrahl auch nur ein Wellenlängenpaket und emittiert somit mit nur einem Wellenlängenbereich von typischerweise 30-60 nm (maximal 90 nm) und ist in diesem Bereich abstimmbar. Jedoch ist ein Farbstofflaser mit einer Emission, welche über den gesamten sichtbaren Bereich von ca. 400-700 nm mit nur einem Farbstoff nicht bekannt.

Es gibt auch Farbstofflaser, welche verschiedene Farbstoffe enthalten und somit einen größeren spektralen Bereich abdecken. Jedoch absorbieren die Farbstoffe längerer Wellenlänge oft die Emission anderer Farbstoffe im höherenergetischen Bereich. Deshalb ist die Leistung von Farbstofflasern oftmals gering bzw. geringer als wenn nur ein Emitterfarbstoff bzw. -material verwendet wird. Zudem ist das Spektrum der Farbstoffe in Farbstofflasern oft breit und in diesem Bereich kontinuierlich, weshalb die einzelnen Wellenlängen über optische Techniken, wie z.B. der Einsatz von Filtern getrennt werden müssen. Weiterhin müssen für die bisher bekannten Farbstofflaser mit größerem spektralen Bereich als ca. 90 nm mehrere Farbstoffe und nicht nur ein Farbstoff verwendet werden.

Für verschiedene Anwendungsgebiete sind jedoch Laser oder OLED notwendig, die ein genau definiertes Licht aussenden, also Strahlung eines schmalbandigen Wellenlängenpakets emittieren. Wünschenswert wären somit Strahlungsquellen mit durchstimmbarer, d.h. mit variabler, frei wählbarer bzw. einstellbarer Wellenlänge oder Laser bzw. OLEDs mit einer Mischung bestimmter schmalbandiger Wellenlängenpakete in Richtung der Farbe Weiß wünschenswert.

Bisher ist ein großer technischer Aufwand notwendig, um den durchstimmbaren Spektralbereich zu verbreiten, oder Strahlung weißer Farbe zu erzeugen. Da die Farbe Weiß aus einer Mischung von Farben des sichtbaren Bereichs besteht/entsteht, wird mithin eine Emission mehrerer Wellenlängen im sichtbaren Bereich benötigt.

Die bisher bekannten Weißlichtlaser enthalten eine Kombination aus verschiedenen Gasen, sog. Gaslaser. Jedes Gas emittiert Licht einer charakteristischen Wellenlänge und durch Kombination der emittierten Wellenlänge wird weißes Licht erzeugt. Hierfür müssen jedoch mehrere Gase eingesetzt werden.

In einem anderen Verfahren wird durch Addition der Moden in einem extrem dünnen Glasfaserkabel weißes Licht erzeugt. Solche Glasfaserkabel sind jedoch spröde und in dem einzusetzenden, minimalen Querschnitt extrem empfindlich. Somit ist deren Herstellung und Verwendung sehr aufwändig.

Laser oder Dioden finden auch in der Mikroskopie, insbesondere Fluoreszenzmikroskopie breite Anwendung, da eine Anregung unterschiedlicher spektraler Bereiche erzeugt werden kann. In der Praxis werden oft Argon-Kryptonlaser mit Banden bei 488 und 514, 568 und 647 nm mit Helium-Neonlaser mit Banden bei 633 nm kombiniert. Bisher werden dazu Kombinationen von zwei Lasersystem mit jeweils zwei verschiedenen Gasen notwendig. Bei Bedarf zusätzlicher Wellenlängen werden bisher additiv Laserdioden oder Festkörperlaser eingesetzt.

Bei der Kombination verschiedener Fluoreszenzfarbstoffe ergibt sich neben dem technischen Aufwand ferner das Problem der strahlungslosen Energieübertragung. Es findet ein Energietransfer zwischen Absorption und Emission statt, in der bei Mischung von verschiedenen Farbstoffen dazu führt, dass die Emission der niedrigeren Wellenlängen strahlungslos auf einen anderen Farbstoff übertragen wird.

Dabei wird in einigen Fällen nur die Emission der längeren Wellenlänge erhalten. Dies kann sowohl bei Laser, als auch bei LED (Licht-emittierende Diode) bzw. organischen Leuchtdioden auftreten.
Als Stand der Technik kann Jia-Sheng Lu et al., "A Dual Emissive BODIPY Dye and Its Use in Functionalizing Highly Monodispersed PbS Nanoparticles", Angewandte Chemie International Edition, Bd. 50, Nr. 49, 13. Oktober 2011, Seiten 11658-11662 genannt werden.

Es besteht somit Bedarf an Strahlungsquellen, insbesondere Lichtquellen, die Strahlung in mehr als einem genau definierten Wellenlängenbereich aussenden, technisch einfach herstellbar und handhabbar sind. Die Strahlungsquellen sollten somit mehrere Emissionsbande unterschiedlicher Wellenlängen aussenden, um durch Mischen der emittierten Strahlung u.a. auch weißes Licht zu erhalten.

Aufgabe der vorliegenden Erfindung war es, Verbindungen aufzufinden und zur Verfügung zu stellen, die eine Lumineszenz mit mindestens drei spektroskopisch definierten und einzeln erkennbaren Emissionsbanden zu besitzen.

Ferner war es Aufgabe der vorliegenden Erfindung, technische Anwendungen für die aufgefundenen Verbindungen zur Verfügung zu stellen, insbesondere zum Erzeugen von Laser, LED bzw. OLED / Laserdiode mit variabler, frei wählbarer Wellenlänge, zum Beispiel für die Mikroskopie.

Gelöst wird diese Aufgabe durch die Verwendung einer Verbindung der Formel I 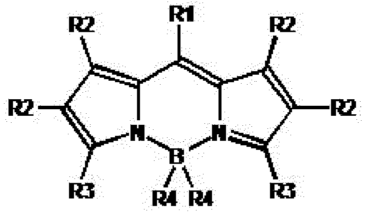 mit einem Grundgerüst der Formel II: 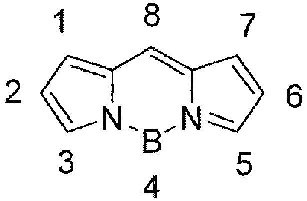 und
R1, ausgewählt aus der Gruppe enthaltend oder bestehend aus:
   R1-i) Substituenten ausgewählt aus der Gruppe enthaltend oder bestehend aus:
      Wasserstoff, Halogenid, Cyanid, Azid, Hydrazide, Amin, Carboxy-, Hydroxy-,Thiol-, Carbonyl-, Sulfonyl-, Sulfonat-, Nitro-, Silyl-, Selenyl-, Phosphynil-, Phosphonyl-, Phosphoryl-Gruppen, die verethert, verestert oder alkyliert sein können;
   R1-ii) Kohlenwasserstoffverbindungen ausgewählt aus der Gruppe enthaltend oder bestehend aus:
      Alkyle, Alkenyle, Alkinyle, Alkoxy, Carboalkoxy, einschl. zyklischer Kohlenwasserstoffverbindungen, Aryle, wobei alle o.g. Kohlenwasserstoffverbindungen mindestens ein Heteroatom enthalten können, ggf. sind die o.g. Verbindungen substituiert mit Verbindungen ausgewählt aus der Gruppe enthaltend oder bestehend aus Alkylen, Alkenylen, Alkinylen, einschl. der entsprechenden zyklischen Kohlenwasserstoffverbindungen, Aryle, Heteroaryle und Substituenten gemäß R1i),
   R1-iii) jede beliebige Kombination von 2,3,4,5,6,7,8,9,10 oder mehr Verbindungen der zuvor genannten Kohlenwasserstoffverbindungen R1-ii);
R2, unabhängig voneinander, ausgewählt aus der Gruppe enthaltend oder bestehend aus: R1-i), R1-ii) und R1-iii);
R3, unabhängig voneinander, ausgewählt aus der Gruppe enthaltend oder bestehend aus:
   Alkenyl, Cycloalkenyl, Aryl gegebenenfalls (ggf.) enthaltend mindestens ein Heteroatom, wobei mindestens eine Mehrfachbindung in Konjugation mit dem Grundgerüst ist und
   das Alkenyl, Cycloalkenyl, Aryl ggf. substituiert ist mit einer Verbindung ausgewählt aus der Gruppe enthaltend oder bestehend aus R1-i) bis R1-iii) ;
R4, ausgewählt aus der Gruppe enthaltend oder bestehend aus: R1-i), R1-ii) und R1-iii);
   zur Erzeugung einer Lumineszenz mit mindestens drei Emissionsbanden, dadurch gekennzeichnet, dass eine Verbindung der Formel III eingesetzt wird 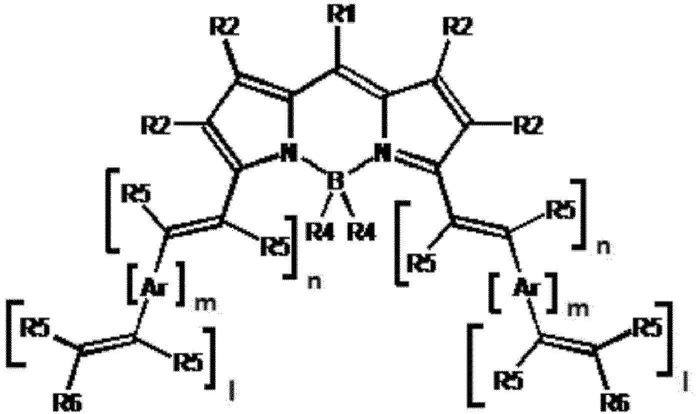 mit R5 und/oder R6 unabhängig voneinander ausgewählt aus der Gruppe enthaltend: R1-i), R1-ii) und R1-iii) und n und I unabhängig voneinander 1, 2, 3, 4, 5, 6, 7, 8,9 oder 10 und m 1, 2, 3, 4 oder 5 ist.

Mithin werden Verbindungen der Formel I als Emitterfarbstoff und -material zur Erzeugung einer Lumineszenz mit mindestens drei getrennt bzw. einzeln erkennbaren Emissionsbanden verwendet. Unter Emitterfarbstoffen sind Stoffe zu verstehen, die zur Emission von Licht befähigt sind, bevorzugt zwischen 200 und 900 nm. Unter Emittermaterialien sind Materialien zu verstehen, welche die Emitterfarbstoffe zur Erzeugung einer Lumineszenz verwenden, bevorzugt zwischen 200 und 900 nm.

In einer Alternative enthält eine erfindungsgemäß einzusetzende Verbindung der Formel I genau ein Grundgerüst der Formel II.
Die Positionen R1, R2 und/oder R4 des Grundgerüsts bzw. die Substituenten an R1-R4 können auch mittels Polyether, insbesondere PEG, verethert und/oder verestert sein.

In einer Ausführung der vorliegenden Erfindung umfasst der Begriff Amin primäre, sekundäre oder tertiäre Amine. Sekundäre oder tertiäre Amine besitzen Substituenten wie in R1i-iii) beschrieben.

Erfindungsgemäß handelt es sich bei den Emissionsbanden um Peaks die einzeln dargestellt werden können, d.h. die mindestens jeweils ein lokales Maximum besitzen bzw. als einzelne Bande erkennbar sind. Die Emissionsbanden weisen einen glatten und unstrukturierten Bandenverlauf auf, d.h. bei einer spektralen Auflösung von 1 nm weisen die Banden nur ein Maximum auf. In einer Ausführung sind die Banden keine Schultern und besitzen somit einen stetigen Bandenverlauf.

In einer Ausführung der vorliegenden Erfindung liegen die Emissionsbanden im Wellenlängenbereich zwischen 200 nm und 900 nm, bevorzugt zwischen 250 nm und 800 nm, besonders bevorzugt zwischen 400 nm und 700 nm.

In einer Alternative mindestens vier oder mehr Emissionsbanden vor.

In einer weiteren Ausführung ist die Lumineszenz eine Fluoreszenz oder Elektrolumineszenz. Im Sinne der vorliegenden Erfindung versteht man unter Lumineszenz eine optische Strahlung eines physikalischen Systems, die beim Übergang von einem angeregten Zustand in einen Grundzustand emittiert wird. Erfindungsgemäß ist unter Fluoreszenz die Lumineszenz zu verstehen, bei der elektromagnetische Strahlung, insbesondere Licht emittiert wird, wobei beim Übergang vom angeregten Zustand in den Grundzustand der Elektronenspin nicht geändert wird und der Übergang somit erlaubt ist. Das angeregte Molekül befindet sich dabei ca. 10 E-10 bis 10 E-7 ns im angeregten Zustand.

In einer Ausführung der vorliegenden Erfindung ist mindestens ein Rest R2 ausgewählt aus der Gruppe der Verbindungen definiert für R3.

In einer Alternative ist unabhängig voneinander R3 = R3a - R3b. D. h. R3 ist aus mindestens zwei Resten R3a und R3b gebildet, die mittels einer kovalenten Bindung miteinander verknüpft sind. Dabei ist R3a ein Alkenyl, bevorzugt mit 2, 4, 6, insbesondere 2 Kohlenstoffatomen ist und R3b mindestens ein Aryl und/oder Heteroaryl. Ggf. (gegebenenfalls) ist R3a und/oder R3b substituiert mit einer Verbindung ausgewählt aus der Gruppe enthaltend oder bestehend aus R1-i), R1-ii) und R1-iii).

Es wird also eine Verbindung der Formel III eingesetzt: 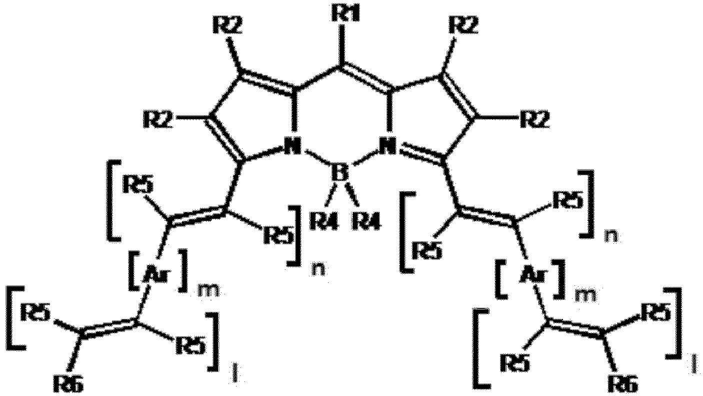
mit R1 bis R4 wie oben definiert und R5 und/oder R6 unabhängig voneinander ausgewählt aus der Gruppe enthaltend oder bestehend aus: R1-i), R1-ii) und R1-iii) und
n und I unabhängig voneinander 1, 2, 3, 4, 5, 6, 7, 8, 9 oder 10 und m 1, 2, 3, 4 oder 5 ist
und Ar für Aryl steht.

Erfindungsgemäß umfasst der Begriff Aryl aromatische und/oder heteroaromatische Verbindungen. Ebenso umfasst der Begriff Aromat, aromatische Verbindungen u.ä., davon abgeleitete Begriffe auch Heteroaromate, heteroaromatische Verbindungen usw.

Liegen mehrere Aromate vor, können diese über eine Kohlenstoffbindung miteinander verbunden sein. In einer Alternative liegen kondensierte aromatische Verbindungen vor. Erfindungsgemäß können kondensierte Aromate mit zwei 2, 3, 4 oder 5 Ringen verwendet werden.

Eine Alternative betrifft die Verwendung einer Verbindung der Formel IV: 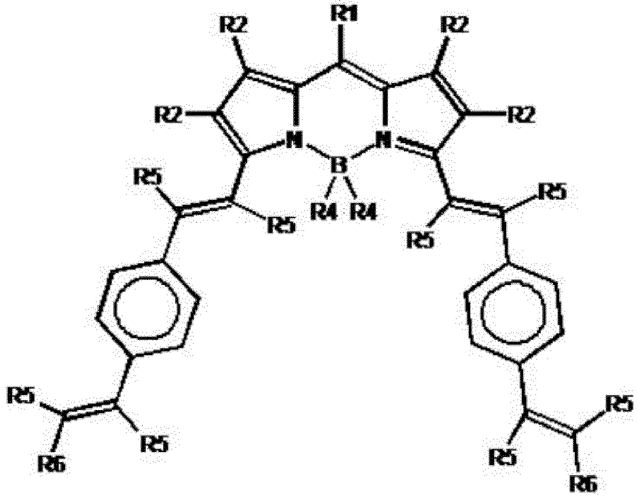
mit R1 bis R6 wie oben definiert, wobei mindestens ein Phenyl-Ring mit R1-i) bis R1-iii) substituiert sein kann.
Bevorzugt ist R5 ist Wasserstoff, Ar ist Phenyl bzw. substituiertes Phenyl, R6 ist Alkyl, bevorzugt mit 1 - 6 Kohlenstoffatomen, besonders bevorzugt Hexyl, insbesondere perfluoriertes Hexyl C6 F13 bzw. R6 wie oben definiert.

In einer weiteren Alternative ist R1 ein Aryl, bevorzugt Phenyl, substituiert mit mindestens einer Gruppe COOR7, wobei R7 ein Alkyl, bevorzugt Methyl ist oder das Aryl, bevorzugt Phenyl, substituiert ist mit mindestens einem Halogenid, bevorzugt Fluorid. Besonders bevorzugt handelt es sich um ein perhalogeniertes, insbesondere perfluoriertes Aromat.
Eine Alternative betrifft die Verwendung einer Verbindung mit R4 ein Halogenid, bevorzugt Fluorid.

In einer bevorzugten Ausführung werden erfindungsgemäß Verbindungen der Formel I eingesetzt, die an Position 3 und/oder Doppelbindungen aufweisen, die in Konjugation mit dem Grundgerüst sind. Bei den Doppelbindungen kann es sich um olefinische und/oder aromatische Doppelbindungen handeln. Bevorzugt befindet sich an Position 3 und/oder 5 mindestens eine olefinische Doppelbindung in Konjugation mit dem Grundgerüst sowie mit mindestens einem Aromat. Bevorzugt ist dieser Aromat Phenyl. In einer weiteren Ausführung ist dieser mindestens eine Aromat Furan, in Konjugation mit einem weiteren Aromat, bevorzugt Phenyl.
In einer weiteren Ausführung sind die aromatischen Doppelbindungen in Konjugation mit mindestens einer weiteren olefinischen Doppelbindung.

Eine Alternative betrifft die Verwendung einer Verbindung der Formel V 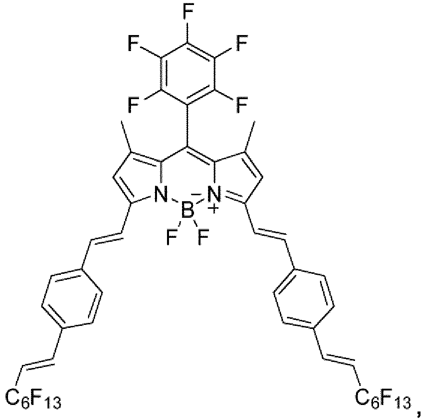 bevorzugt 4,4-Difluor-1,7-dimethyl-3,5-bis(*E*)-4-(*E*)-1*H*,2-perfluoroct-1-en-1yl) styryl)-8-(perfluorphenyl)-4-bora-3a,4a-diaza-*s*-indacen;
der Formel VI 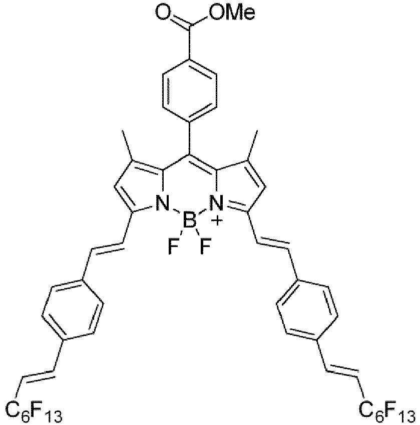 bevorzugt: 4,4-Difluor-8-(4-(methoxycarbonyl)phenyl)-1,7-dimethyl-3,5-bis((E)-4-1*H*,2*H*-perfluoroct-1-en-1-yl)styryl)-4-bora-3a,4a-diaza-*s*-indacen
oder der Formel VII 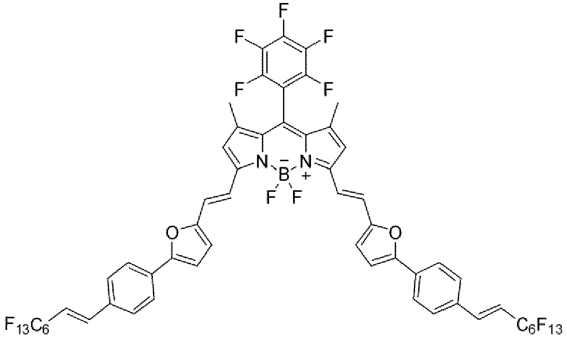 bevorzugt: 4,4-Difluor-1,7-dimethyl-3,5-bis(*E*)-5-(*E*)-1*H*,2-perfluoroct-1-en-1yl) styryl)-2-furanyl-8-(perfluorphenyl)-4-bora-3a,4a-diaza-*s*-indacen.

Gegenstand der vorliegenden Erfindung ist auch ein Verfahren, in welchem eine Verbindung gemäß der allgemeinen Formel III mit Energie angeregt wird, wobei eine Lumineszenz erzeugt wird, die mindestens drei getrennte Emissionsbanden aufweist.

Die Anregung erfolgt mit elektromagnetischer Strahlung, einer Wellenlänge zwischen 200 nm und 900 nm, bevorzugt 200 bis 700 nm. Die Wellenlänge der Emissionsbanden der Lumineszenz liegt oberhalb der Wellenlänge der Anregung. In dieser Alternative handelt es sich bei der Lumineszenz um eine sog. Photolumineszenz, insbesondere Fluoreszenz.

Die Anregung erfolgt dabei mittels eines elektrischen Feldes.
In dieser Alternative handelt es sich bei der Lumineszenz um eine Elektrolumineszenz. Die Anregung erfolgt durch das Anlegen eines elektrischen Feldes bzw. einer elektrischen Spannung infolge dessen die erfindungsgemäß zu verwendende Verbindung elektromagnetische Strahlung, z.B. in Form von Licht emittiert.

Durch die erfindungsgemäße Verwendung und das erfindungsgemäße Verfahren wird eine Lumineszenz mit mindestens drei Emissionsbanden erhalten. Diese Lumineszenz kann vorteilhaft im Laser als auch in der LED, insbesondere OLED oder Laserdioden, eingesetzt werden.

Einerseits können die einzelnen Emissionsbanden durch Filter, Gitter oder weitere Komponenten voneinander getrennt werden. Besonders vorteilhaft erweist sich die Tatsache, dass die Emissionsbanden schmalbandig, deutlich voneinander getrennt sind und in unterschiedlichen Wellenlängenbereichen liegen. Deshalb ist eine Auftrennung ohne großen technischen Aufwand möglich. Ferner findet ein Energietransfer in Richtung Auslöschung der Emission nicht statt.

Die erfindungsgemäß einzusetzenden Farbstoffe können somit in Laser, LEDs, OLEDs und Laserdioden eingesetzt werden, die einen breiten durchstimmbaren Wellenlängenbereich besitzen, also mit einer frei wählbaren, einstellbaren und/oder variablen Emissionswellenlänge über einen breiten Wellenlängenbereich, insbesondere im sichtbaren Bereich. Als LED (lichtemittierende Dioden) sind hierbei alle Arten der Erstellung der Lichtemission auf Basis von Dioden berücksichtigt, somit auch Laserdiod, RCLED (resonant-cavity light emitting Diode), OLED (Organische Leuchtdioden) und weitere inbegriffen.

Eine weitere Ausführung der vorliegenden Erfindung betrifft die Verwendung der Lumineszenz erzeugt in einem erfindungsgemäßen Verfahren oder charakterisiert wie oben beschrieben zur Erzeugung eines Lasers bzw. Laserdiode mit frei wählbarem Wellenlängenbereich.

Die Offenbarung betrifft ebenso ein Verfahren zur Erzeugung der oben beschriebenen Lumineszenz, wobei durch (entsprechendes) Mischen der Emissionsbanden eines Lasers bzw. Laserdiode mit variabler, frei wählbarer Wellenlänge erzeugt wird oder Lumineszenz mit einer weißen Farbe.

Eine weitere Ausführung der vorliegenden Erfindung betrifft die Verwendung der Lumineszenz erzeugt in einem erfindungsgemäßen Verfahren oder charakterisiert wie oben beschrieben in einer Leuchtdiode oder organischen Leuchtdiode (OLED, organische Licht-emittierende Diode) mit frei wählbarer Wellenlänge.

Die Offenbarung betrifft ebenso ein Verfahren zur Erzeugung der oben beschriebenen Lumineszenz, wobei durch (entsprechendes) Mischen der Emissionsbanden eine LED oder OLED mit variabler, frei wählbarer Wellenlänge erzeugt wird oder Lumineszenz mit einer weißen Farbe.

Ferner kann die erfindungsgemäße Verwendung und das erfindungsgemäße Verfahren zur Herstellung von Laser und LEDs, OLEDs und Laserdioden verwendet werden, die durch eine Emission mehrerer Emissionsbanden, Licht mit weißer Farbe erzeugen. Anders als die aus dem Stand der Technik bekannten Weißlichtlaser wird erfindungsgemäß nur eine einzige Substanz eingesetzt. Diese Verbindung kann auch in Lösung eingesetzt werden, da die erfindungsgemäß einzusetzenden Verbindungen in Lösung stabil sind. Möglich ist jedoch auch ein Einsatz in nicht gelöstem Zustand.

Eine weitere Ausführung betrifft Verwendung der Lumineszenz erzeugt in einem erfindungsgemäßen Verfahren oder charakterisiert wie oben beschrieben zur Erzeugung von weißem Licht mittels LED oder OLED oder weißem Laser.

Die Offenbarung betrifft ebenso ein Verfahren zur Erzeugung der oben beschriebenen Lumineszenz, wobei durch (entsprechendes) Mischen der Emissionsbanden eine LED oder OLED oder ein Laser mit weißem oder weißlichem Licht bzw. Licht in Richtung Weiß erzeugt wird.

Im Sinne der Erfindung handelt es sich bei der Farbe "Weiß", bzw. bei weißem Licht oder Licht der Farbe Weiß um eine unbunte Farbe, die durch ein Gemisch aus Einzelfarben entsteht. In einer Ausführung der Erfindung wird weiß mittels des Lab-Systems definiert, in einer weiteren gemäß dem RGB-Modell oder dem CMYK-Modell. In einer weiteren Ausführung wird weißes Licht, insbesondere bei LED oder OLED gemäß IEC 1231/International Lamb Coding System definiert, und umfasst Warmweiß, cool white und Tageslicht-Weiß.

Insbesondere durch die Lage der Emissionsbanden im sichtbaren Bereich von blau-grün bis Nahinfrarot kann durch Mischung dieser Emissionen Licht unterschiedlicher Farben auch weißes Licht erzeugt werden.

Zudem ist die Intensität der einzelnen Banden in den untersuchten Verbindungen abhängig von der Anregungswellenlänge, somit kann durch die Auswahl der Anregungswellenlänge die einzelnen Farben (Emissionsbanden) mit verschiedenen Anteilen zur Durchmischung der Farben beitragen und somit die Farbe in Richtung weiß beeinflussen. Durch die unterschiedlichen Intensitäten kann daher z.B. der Anteil der Emission im gelben Spektralbereich erhöht und somit ein gelblicheres Weiß erhalten werden. Genauso ist dies möglich die Intensitäten durch andere Anregungswellenlängen in den bläulichen oder rötlichen Bereich zu verschieben.

In einer Ausführung der vorliegenden Erfindung wird eine Verbindung der Formel V eingesetzt. In einer Alternative wird eine Verbindung der Formel VI eingesetzt. In einer weiteren Alternative wird eine Verbindung der Formel VII eingesetzt.

Da die erfindungsgemäß zu verwendenden Verbindungen mehrere, schmalbandige Emissionsbanden in unterschiedlichen Wellenlängenbereichen besitzen, wird die Verwendung unterschiedlicher Laser oder unterschiedlicher Strahlungsquellen - wie aus dem Stand der Technik bekannt - nicht mehr notwendig. Weitere Fluoreszenzfarbstoffe können durch die genau definierten Emissionsbanden der erfindungsgemäß zu verwendenden Verbindungen angeregt werden.

Vorteilhaft ist auch eine erfindungsgemäße Verwendung in der Mikroskopie und Spektroskopie.

Ein weiterer Vorteil der erfindungsgemäßen Verwendung und des erfindungsgemäßen Verfahrens basiert auf der besseren Helligkeit der erfindungsgemäß einzusetzenden Verbindung im Vergleich zu herkömmlichen Laserfarbstoffen. Helligkeit ist in einer Ausführung mit der Intensität der Strahlung gleichzusetzen, die beobachtet wird. In einer Alternative ist sie mit der Lichtstärke gleichzusetzen und wird in Candela gemessen.

Durch Auswahl und Kombination von R1, R2, R3 und/oder R4 kann die Wellenlänge der Emissionsbanden verschoben werden. Ebenso kann eine Verschiebung der Emissionsbanden aufgrund Elektronenschiebender, oder - ziehender Effekte, zum Beispiel +I- und/oder +M-Effekte bzw. -I und/oder -M-Effekte, sowie der Größe des delokalisierten Systems gebildet aus Grundgerüst und R1, R2 und/oder R3 erfolgen.

Gegenstand der vorliegenden Offenbarung ist somit auch ein Verfahren zur Verschiebung der Emissionsbanden durch Kombination von R1, R2, R3 und/oder R4 der erfindungsgemäß zu verwendenden Verbindungen.

### Beispiele:

Es wurden Emissionsspektren unterschiedlicher Verbindungen in Lösung aufgezeichnet. Die Anregung erfolgte bei unterschiedlichen Wellenlängen.

### Beispiel 1:

Erfindungsgemäß einzusetzende Verbindung der Formel V:

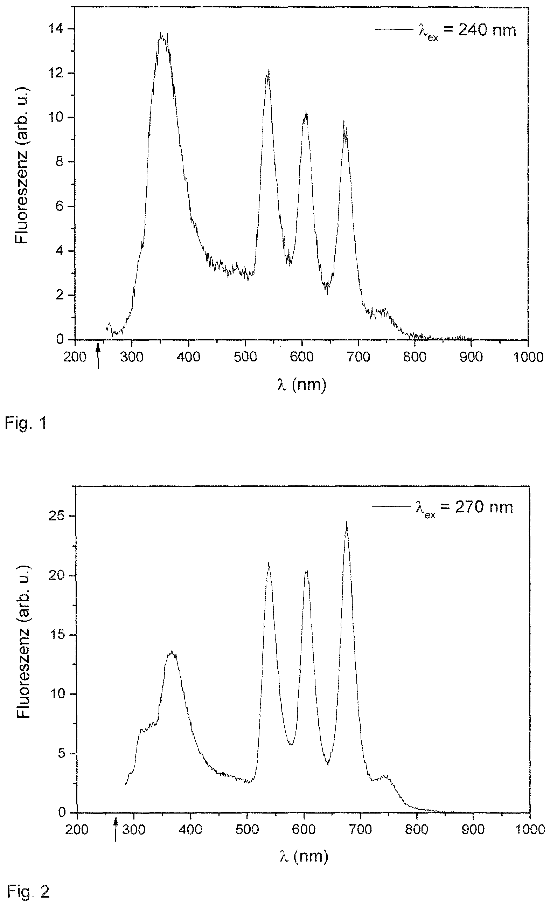

Figur 1 zeigt beispielhaft, das Emissionsspektrum bei 240 nm Anregungswellelänge, Figur 2 bei 270 nm Anregungswellenlänge.

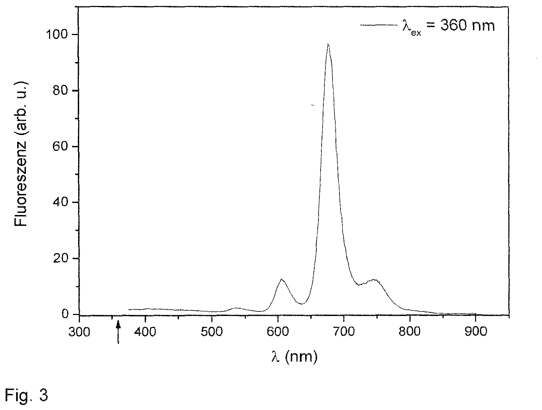

Figur 3 zeigt das Emissionsspektrum bei Anregungswelle 360 nm.

Deutlich sind mindestens 3 Emissionsbanden erkennbar.

### Beispiel 2:

Erfindungsgemäß einzusetzende Verbindung der Formel VI:
Figur 4 zeigt das Emissionsspektrum der Verbindung mit Formel VI bei 340 nm. Deutlich sind mindestens 3 Emissionsbanden erkennbar.

Das Spektrum der Verbindung mit Formel VI bei 340 nm ist vergleichbar mit dem Emissionsspektrum der Verbindung gemäß Formel V bei 360 nm. Durch Anregung der Substanz gemäß Formel VI bei niedrigerer Wellenlänge kann somit eine stärkere Aufspaltung der Emissionsbanden erreicht werden.

### Beispiel 3:

Erfindungsgemäß einzusetzende Verbindung der Formel VII:

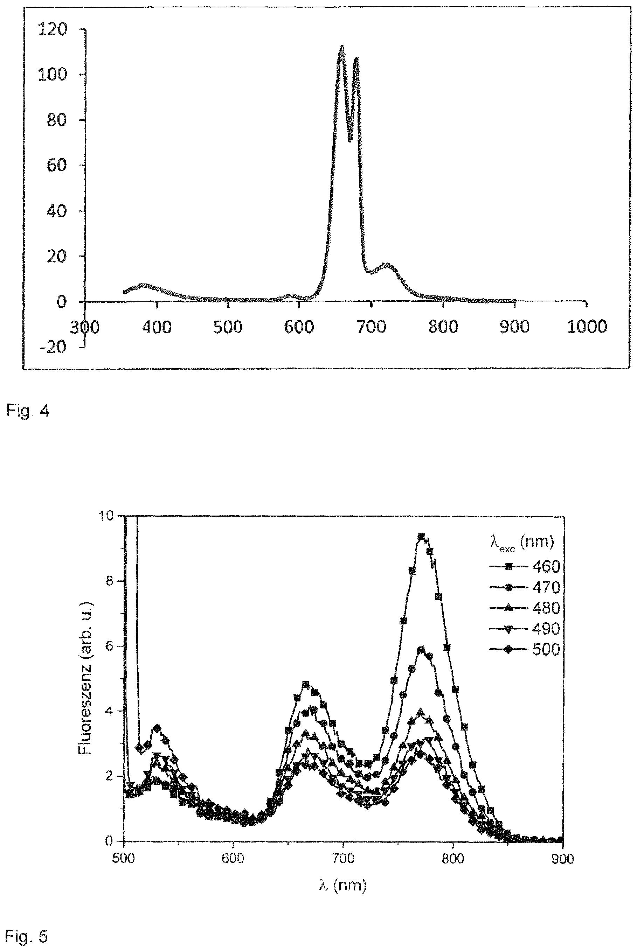

Figur 5 zeigt das Emissionsspektrum der Verbindung gemäß Formel VII bei unterschiedlichen Anregungswellenlängen von 460 bis 500 nm.
Deutlich sind mindestens 3 Emissionsbanden bei 530, 666 und 770 nm erkennbar.

### Beispiel 4:

Vergleichsversuche mit anderen Verbindungen basierend auf dem Grundgerüst der Formel II.

Emissionsspektrum folgender Verbindungen wurden erstellt:
R_{f6} := C₆F₁₃ (perfluorierte Alkylkette)

### 2,6-subst 1

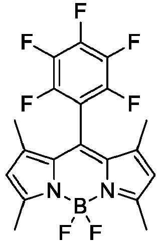

### 2,6-subst 2

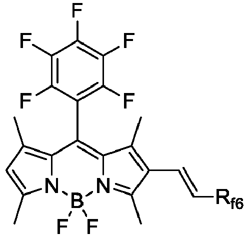

### 2,6-subst 3

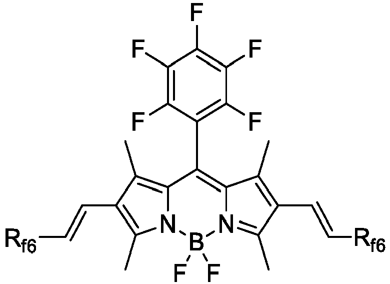

### 2,6-subst 4

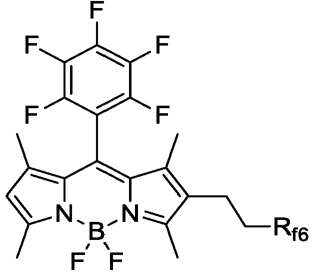

### 2,6-subst 5

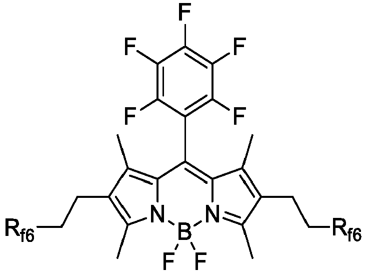

### 2,6-subst 6

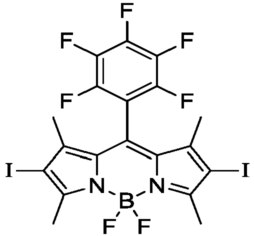

### 2,6-subst 7

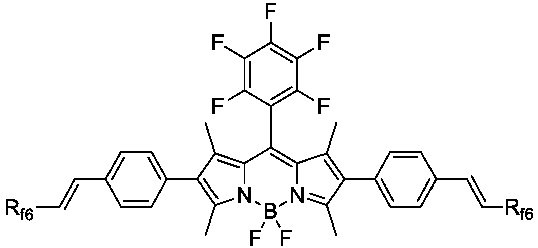

### 2,6-subst 8

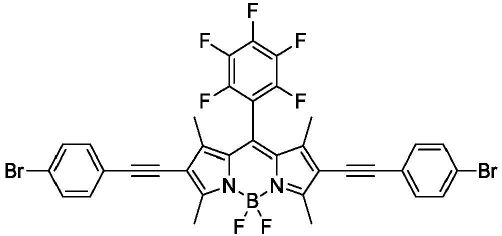

### 2,6-subst 9

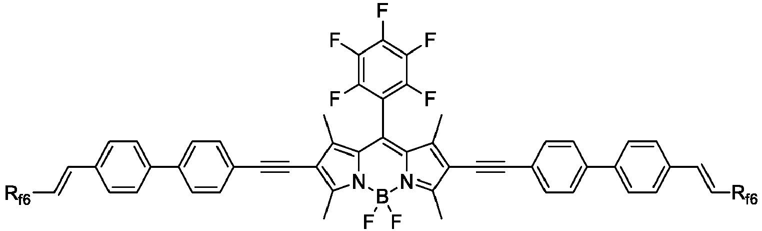

### 2,6-subst 10

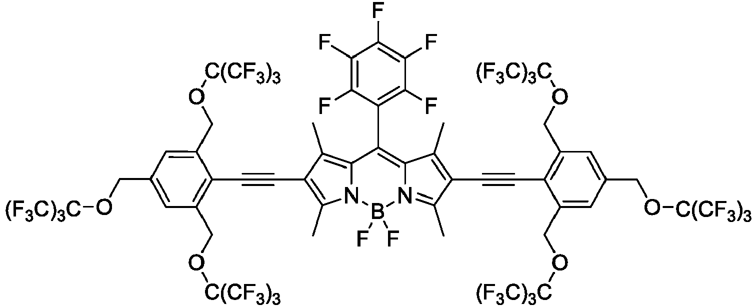

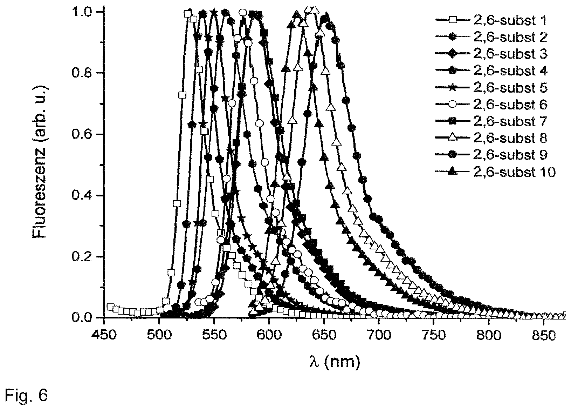

Die entsprechenden Emissionsspektren sind Fig. 6 zu entnehmen. Aus Fig. 6 wird deutlich, dass die Verbindungen lediglich eine Emissionsbande aufweisen und somit erfindungsgemäß nicht eingesetzt werden können.

## Patentansprüche

1. Verwendung einer Verbindung der Formel I 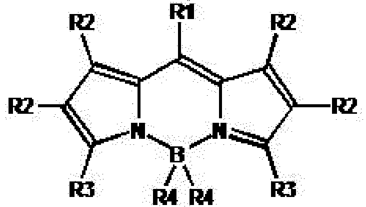 mit einem Grundgerüst der Formel II: 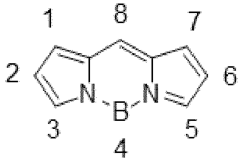 und
R1, ausgewählt aus der Gruppe enthaltend:
R1-i) Substituenten ausgewählt aus der Gruppe enthaltend: Wasserstoff, Halogenid, Cyanid, Azid, Hydrazide, Amin, Carboxy-, Hydroxy-, Thiol-, Carbonyl-, Sulfonyl-, Sulfonat-, Nitro-, Silyl-, Selenyl-, Phosphynil-, Phosphonyl-, Phosphoryl-Gruppen, die verethert, verestert oder alkyliert sein können;
R1-ii) Kohlenwasserstoffverbindungen ausgewählt aus der Gruppe enthaltend:
Alkyle, Alkenyle, Alkinyle, Alkoxy, Carboalkoxy, einschl. zyklischer Kohlenwasserstoffverbindungen, Aryle, wobei alle o.g. Kohlenwasserstoffverbindungen mindestens ein Heteroatom enthalten können, ggf. sind die o.g. Verbindungen substituiert mit Verbindungen ausgewählt aus der Gruppe enthaltend Alkylen, Alkenylen, Alkinylen, einschl. der entsprechenden zyklischen Kohlenwasserstoffverbindungen, Aryle, Heteroaryle und Substituenten gemäß R1i),
R1-iii) jede beliebige Kombination von 2,3,4,5,6,7,8,9,10 oder mehr Verbindungen der zuvor genannten Kohlenwasserstoffverbindungen R1-ii);
R2, unabhängig voneinander, ausgewählt aus der Gruppe enthaltend: R1-i), R1-ii) und R1-iii);
R3, unabhängig voneinander, ausgewählt aus der Gruppe enthaltend: Alkenyl, Cycloalkenyl, Aryl gegebenenfalls (ggf.) enthaltend mindestens ein Heteroatom, wobei mindestens eine Mehrfachbindung in Konjugation mit dem Grundgerüst ist und
dasAlkenyl, Cycloalkenyl, Aryl ggf. substituiert ist mit einer Verbindung ausgewählt aus der Gruppe enthaltend R1-i) bis R1-iii);
R4, ausgewählt aus der Gruppe enthaltend: R1-i), R1-ii) und R1-iii);
zur Erzeugung einer Lumineszenz mit mindestens drei Emissionsbanden **dadurch gekennzeichnet, dass** eine Verbindung der Formel III eingesetzt wird 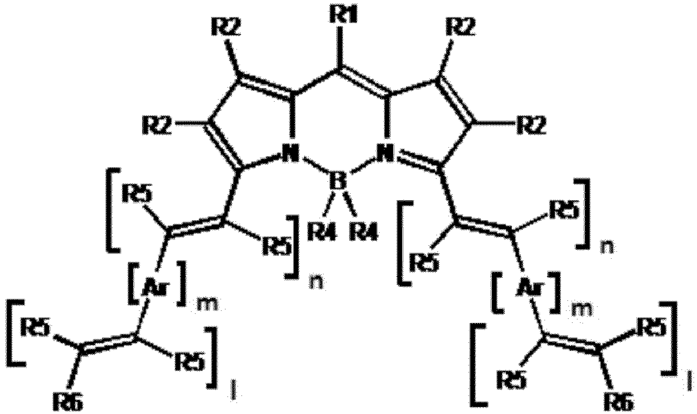 mit R5 und/oder R6 unabhängig voneinander ausgewählt aus der Gruppe enthaltend: R1-i), R1-ii) und R1-iii) und n und I unabhängig voneinander 1, 2, 3, 4, 5, 6, 7, 8,9 oder 10 und m 1, 2, 3, 4 oder 5 ist.

2. Verwendung nach Anspruch 1 **dadurch gekennzeichnet, dass** die Emissionsbanden im Wellenlängenbereich zwischen 200 nm und 900 nm liegen, bevorzugt zwischen 250 nm und 800 nm, besonders bevorzugt zwischen 400 nm und 700 nm.

3. Verwendung nach einem der vorangehenden Ansprüche **dadurch gekennzeichnet, dass** mindestens vier oder mehr Emissionsbanden vorliegen.

4. Verwendung nach einem der vorangehenden Ansprüche **dadurch gekennzeichnet, dass** die Lumineszenz eine Fluoreszenz oder Elektrolumineszenz ist.

5. Verwendung nach einem der vorangehenden Ansprüche **dadurch gekennzeichnet, dass** mindestens ein R2 ausgewählt wird aus der Gruppe definiert für R3.

6. Verwendung nach einem der vorangehenden Ansprüche **dadurch gekennzeichnet, dass** unabhängig voneinander R3 = R3a - R3b ist, wobei R3a ein Alkenyl ist, bevorzugt mit 2, 4, 6, insbesondere 2 Kohlenstoffatomen ist und R3b mindestens ein Aryl und/oder Heteroaryl ist und ggf. R3a und/oder R3b substituiert ist mit einer Verbindung ausgewählt aus der Gruppe enthaltend R1-i), R1-ii) und R1-iii).

7. Verwendung nach einem der vorangehenden Ansprüche **dadurch gekennzeichnet, dass** R1 ein Aryl, bevorzugt Phenyl ist, substituiert mit mindestens einer COOR7 Gruppe, wobei R7 bevorzugt ein Alkyl, besonders bevorzugt Methyl ist oder das Aryl substituiert ist mit mindestens einem Halogenid, bevorzugt Fluorid.

8. Verwendung nach einem der vorangehenden Ansprüche **dadurch gekennzeichnet, dass** R4 ein Halogenid, bevorzugt Fluorid ist.

9. Verwendung nach einem der vorangehenden Ansprüche **dadurch gekennzeichnet, dass** eine Verbindung der Formel V 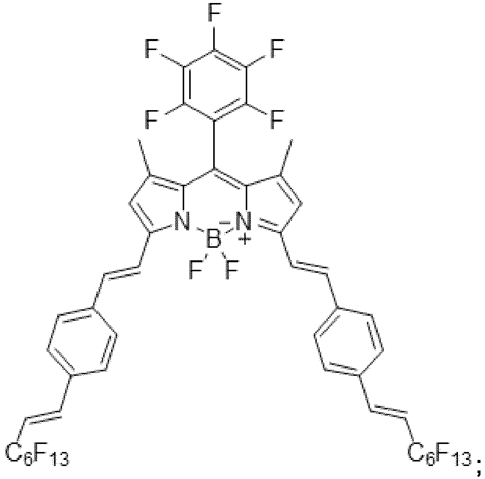 der Formel VI 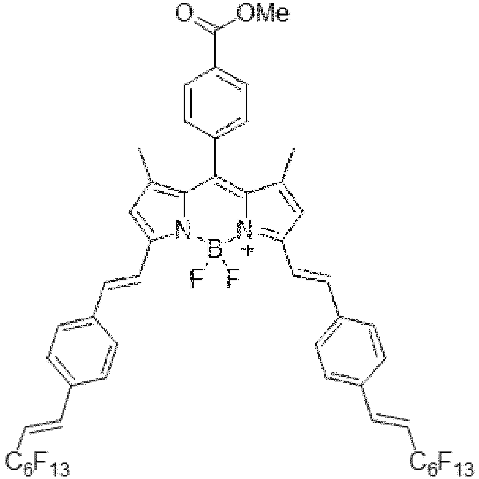 oder der Formel VII 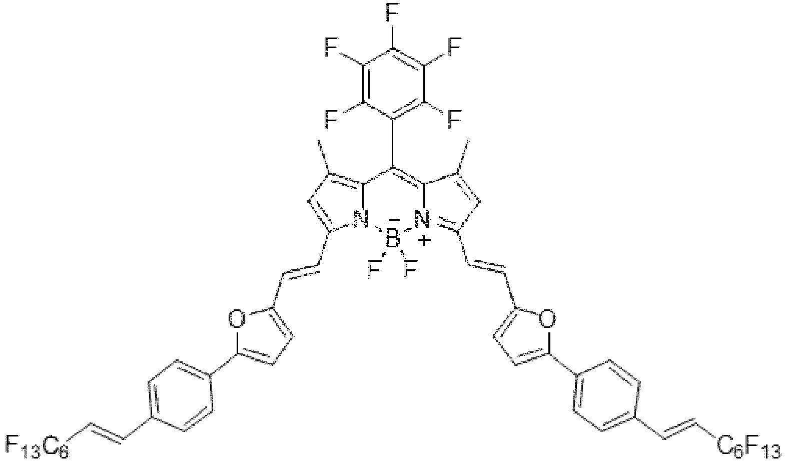 eingesetzt wird.

10. Verfahren zur Erzeugung einer Lumineszenz mit mindestens drei Emissionsbanden **dadurch gekennzeichnet, dass** eine Verbindung der Formel III mit Licht der Wellenlänge von 200 nm bis 900 nm oder mit einem elektrischen Feld angeregt wird.

11. Verwendung der Lumineszenz erzeugt in einem Verfahren gemäß Anspruch 10 oder charakterisiert in einem der Ansprüche 1 - 9 zur Erzeugung eines Lasers mit frei wählbarer Wellenlänge.

12. Verwendung der Lumineszenz erzeugt in einem Verfahren gemäß Anspruch 10 oder charakterisiert in einem der Ansprüche 1 - 9 in einer Leuchtdiode oder organischen Leuchtdiode (OLED, organische Licht-emittierende Diode) mit frei wählbarer Wellenlänge.

13. Verwendung der Lumineszenz erzeugt in einem Verfahren gemäß Anspruch 10 oder charakterisiert in einem der Ansprüche 1 - 9 zur Erzeugung von Licht aus einer Mischung der Emissionsbanden, bevorzugt weißem Licht oder weißem Laser.

## Claims

1. Use of a compound of formula I 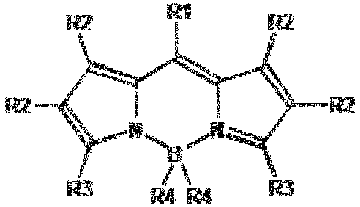 with a skeleton of formula II: 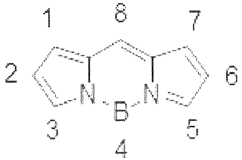 and
R1, selected from the group comprising:
R1-i) substituents selected from the group comprising: hydrogen, halide, cyanide, azide, hydrazides, amine, carboxy-, hydroxy-, thiol-, carbonyl-, sulfonyl-, sulfonate-, nitro-, silyl-, selenyl-, phosphynil-, phosphonyl-, phosphoryl-groups, which may be etherified, esterified ou alkylated;
R1-ii) Hydrocarbon compounds selected from the group comprising:
alkyls, alkenyls, alkynyls, alkoxy, carboalkoxy, including cyclic hydrocarbon compounds, aryls, where all the above mentioned hydrocarbon compounds may contain at least one heteroatom, optionally the above mentioned compounds are substituted with compounds selected from the group comprising alkylene, alkenylene, alkynylene, including the corresponding cyclic hydrocarbon compounds, aryls, heteroaryls and substituents according to R1i),
R1-iii) any combination of 2,3,4,5,6,7,8,9,10 or more compounds of the aforementioned hydrocarbon compounds R1-ii);
R2, independently from one another, selected from the group comprising : R1-i), R1-ii) and R1-iii);
R3, independently from one another, selected from the group comprising: alkenyl, cycloalkenyl, aryl optionally comprising at least one heteroatom, where at least one multiple bond is in conjugation with the skeleton and
the alkenyl, cycloalkenyl, aryl is optionally substituted with a compound selected from the group comprising R1-i) to R1-iii);
R4, selected from the group comprising : R1-i), R1-ii) and R1-iii);
for generating a luminescence with at least three emission bands **characterized in that** a compound of the formula III is used 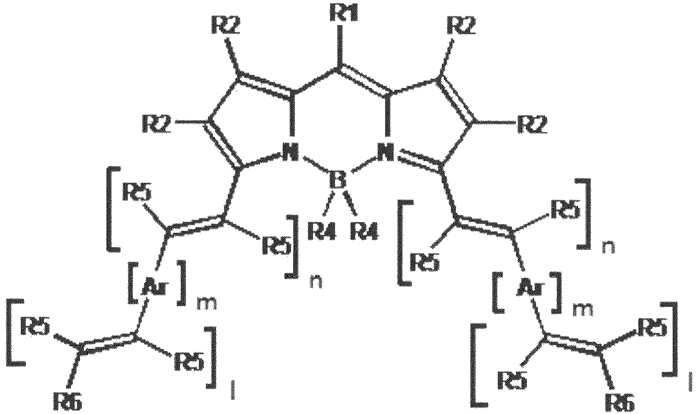
with R5 and/or R6 independently from one another being selected from the group comprising: R1-i), R1-ii) and R1-iii) and n and I independently from one another is 1, 2, 3, 4, 5, 6, 7, 8, 9 or 10 and m 1, 2, 3, 4 or 5 .

2. Use according to claim 1, **characterized in that** the emission bands are in the wavelength range of between 200 nm and 900 nm, preferably between 250 nm and 800 nm, more preferably between 400 nm a 700 nm.

3. Use according to any one of the preceding claims, **characterized in that** at least four or more emission bands are present.

4. Use according to any one of the preceding claims, **characterized in that** the luminescence is a fluorescence or an electroluminescence.

5. Use according to any one of the preceding claims, **characterized in that** at least one R2 is selected from the group defined for R3.

6. Use according to any one of the preceding claims, **characterized in that** independently from one another R3 = R3a - R3b, wherein R3a is an alkenyl, preferably with 2, 4, 6, in particular 2 carbon atoms and R3b at least is one aryl and/or heteroaryl and optionally R3a and/or R3b is substituted with a compound selected from the group comprising R1-i), R1-ii) and R1-iii).

7. Use according to any one of the preceding claims, **characterized in that** R1 is an aryl, preferably phenyl, substituted with at least one COOR7 group, wherein R7 preferably is an alkyl, more preferably methyl or the aryl is substituted with at least one halide, preferably fluoride.

8. Use according to any one of the preceding claims, **characterized in that** R4 is a halide, preferably fluoride.

9. Use according to any one of the preceding claims, **characterized in that** a compound of formula V 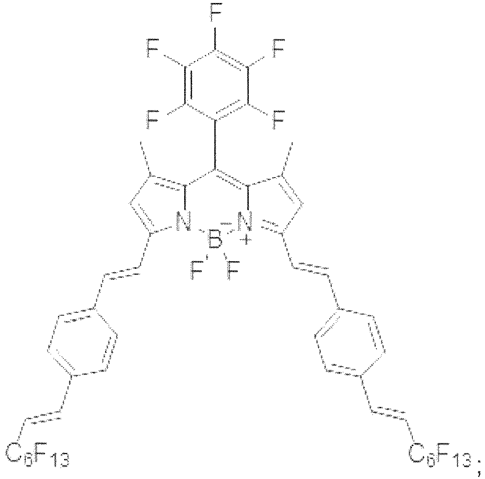 of formula VI 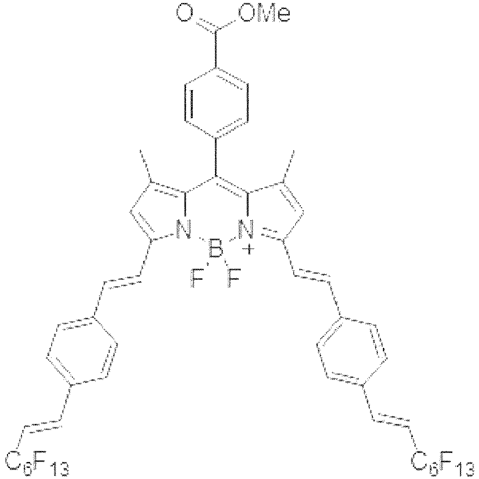 or of formula VII 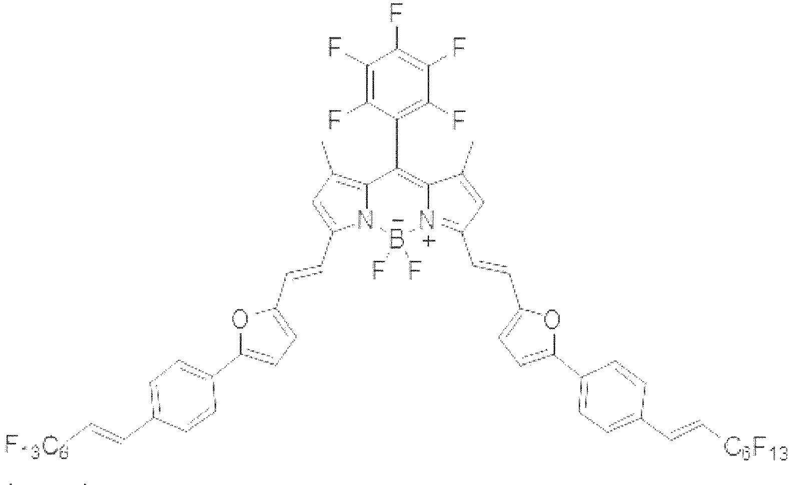 is used.

10. Method for generating a luminescence with at least three emission bands **characterized in that** a compound of the formula III is excited with light of the wavelength of from 200 nm to 900 nm or with an electric field.

11. Use of the luminescence generated in a method according to claim 10 or **characterized in** one of claims 1 - 9 for producing a laser with a freely selectable wavelength.

12. Use of the luminescence generated in a method according to claim 10 or **characterized in** one of claims 1 - 9 in a light-emitting diode or in an organic light emitting diode (OLED, organic light-emitting diode) with a freely selectable wavelength.

13. Use of the luminescence generated in a method according to claim 10 or **characterized in** one of claims 1 - 9 for generating light from a mixture of the emission bands, preferably white light or white laser.

## Revendications

1. Utilisation d'une composition de la formule I 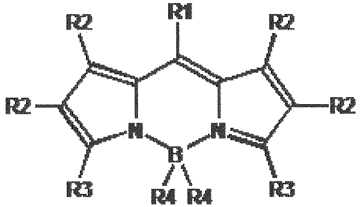 avec une structure de base de la formule II: 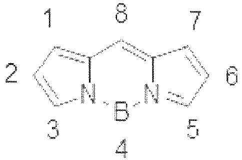 et
R1, choisi du groupe contenant:
R1-i) des substituants choisis du groupe contenant:
de l'hydrogène, de l'halogénure, du cyanure, de l'azide, des hydrazides, d'amine, des groupes carboxyle, hydroxyle, thiol, carbonyle, sulfonyle, sulfonate, nitro, silyle, sélényle, phosphynyle, phosphonyle, phosphoryle, qui peuvent être éthérifiés, estérifiés ou alkylés;
R1-ii) des composés d'hydrocarbures choisis du groupe contenant:
des alkyles, des alcényles, des alcynyles, d'alkoxy, du carboalkoxy, y compris des composés d'hydrocarbures cycliques , des aryles, où tous les composés d'hydrocarbures, mentionnés ci-dessus, peuvent contenir au moins un hétéroatome, les composés mentionnés ci-dessus sont, le cas échéant, substitués des composés, choisis du groupe contenant des alkylènes, des alcénylènes, des alcynylènes, y compris des composés d'hydrocarbures cycliques correspondants, des aryles, des hétéroaryles et des substituants selon R1i),
R1-iii) toute quelconque de combinaison de 2,3,4,5,6,7,8,9,10 ou plus de composés des composés d'hydrocarbures mentionnés ci-dessus R1-ii);
R2, indépendamment les uns des autres, choisis du groupe contenant: R1i), R1-ii) et R1-iii);
R3, indépendamment les uns des autres, choisis du groupe contenant: d'alcényle, du cycloalcényle, d'aryle contenant, le cas échéant, au moins un hétéroatome, où au moins une liaison multiple est en conjugaison avec une structure de base et
l'alcényle, le cycloalcényle, l'aryle est, le cas échéant, substitué avec un composé choisi du groupe contenant R1-i) à R1-iii);
R4, choisi du groupe contenant R1-i), R1-ii) et R1-iii);
pour la production de la luminescence avec au moins trois bandes d'émission **caractérisé en ce qu'**un composé de la formule III est 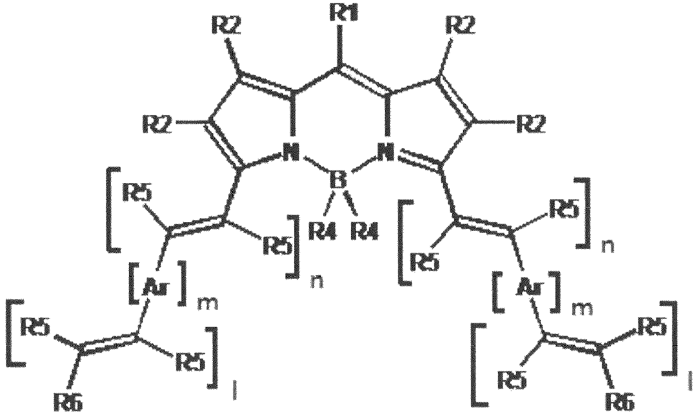
utilisé,
avec R5 et/ou R6 indépendamment les uns des autres étant choisi du groupe contenant: R1-i), R1-ii) et R1-iii) et n et I indépendamment les uns des autres est 1, 2, 3, 4, 5, 6, 7, 8,9 ou 10 et m 1, 2, 3, 4 ou 5 .

2. Utilisation selon la revendication 1 **caractérisée en ce que** les bandes d' émission se situent dans la gamme de longueurs d'onde entre 200 nm et 900 nm, de préférence entre 250 nm et 800 nm, particulièrement préféré d'entre 400 nm et 700 nm.

3. Utilisation selon l'une quelconque des revendications précédentes, **caractérisée en ce qu'**au moins quatre ou plus bandes d' émission sont présentes.

4. Utilisation selon l'une quelconque des revendications précédentes, **caractérisée en ce que** la luminescence est une fluorescence ou une électroluminescence.

5. Utilisation selon l'une quelconque des revendications précédentes, **caractérisée en ce qu'**au moins un R2 est choisi du groupe défini pour R3.

6. Utilisation selon l'une quelconque des revendications précédentes, **caractérisée en ce qu'** indépendamment les uns des autres R3 = R3a - R3b, où R3a est un alcényle, de préférence avec 2, 4, 6, particulièrement avec 2 atomes de carbone et R3b au moins est un aryle et/ou hétéroaryle et, le cas échéant, R3a et/ou R3b est substitué avec un composé choisi du groupe contenant R1-i), R1-ii) et R1-iii).

7. Utilisation selon l'une quelconque des revendications précédentes, **caractérisée en ce que** R1 est un aryle, de préférence un phényle, substitué au moins avec un groupe COOR7, dans lequel R7 de préférence est un alkyle, particulièrement préféré méthyle ou l'aryle est substitué avec au moins d'un halogénure, de préférence fluoride.

8. Utilisation selon l'une quelconque des revendications précédentes, **caractérisée en ce que** R4 est un halogénure, de préférence fluoride.

9. Utilisation selon l'une quelconque des revendications précédentes, **caractérisée en ce qu'**un composé de la formule V 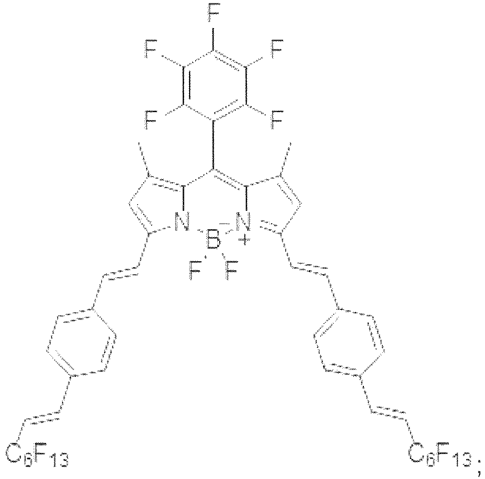 de la formule VI 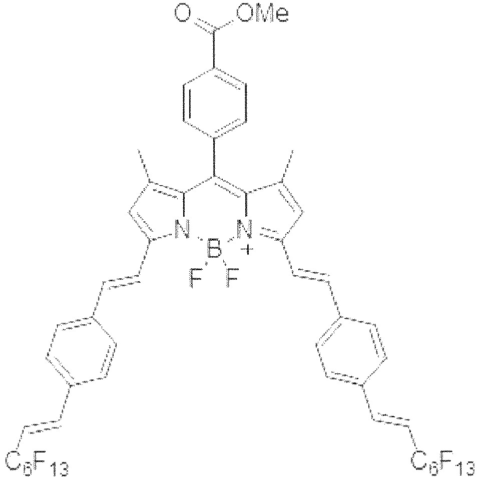 ou de la formule VII 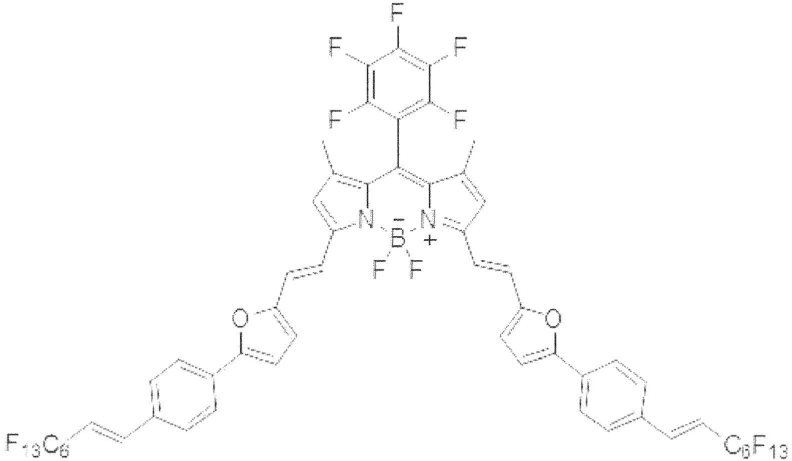 est utilisé.

10. Procédé pour la production de luminescence avec au moins trois bandes d'émission, **caractérisé en ce qu'**un composé de la formule III est excité avec de la lumière de la longueur d'onde de 200 nm à 900 nm ou avec un champ électrique.

11. Utilisation de la luminescence produite selon un procédé selon la revendication 10 ou **caractérisée** en l'une des revendications 1 - 9 pour la production d'un laser avec une longueur d'onde librement sélectionnable.

12. Utilisation de la luminescence produite selon un procédé selon la revendication 10 ou **caractérisée** en l'une des revendications 1 - 9 dans une diode électroluminescente ou une diode électroluminescente organique (OLED, organic light -emitting diode) avec une longueur d'onde librement sélectionnable.

13. Utilisation de la luminescence produite selon un procédé selon la revendication 10 ou **caractérisée** en l'une des revendications 1 - 9 pour la production de la lumière d'une mixture des bandes d'émission, de préférence de la lumière blanche ou du laser blanc.
